# EUROPÄISCHE PATENTSCHRIFT

(11) **EP 1 814 504 B1**
(45) Veröffentlichungstag und Bekanntmachung des Hinweises auf die Patenterteilung: **16.12.2009**
(21) Anmeldenummer: 05797788.6
(22) Anmeldetag: 13.10.2005
(51) Int. Cl.: A61J 1/05, B31B 19/84, B29C 65/74

(54) **KUNSTSTOFFBEUTEL MIT EINEM ODER MEHREREN PORTS SOWIE HERSTELLUNGSVERFAHREN FÜR KUNSTSTOFFBEUTEL**
PLASTIC BAG WITH ONE OR MORE PORTS AND METHOD FOR PRODUCTION OF PLASTIC BAGS
POCHE EN PLASTIQUE COMPRENANT UN OU PLUSIEURS ORIFICES ET PROCEDE DE PRODUCTION ASSOCIE

(30) Priorität: 15.10.2004 DE 102004050603
(43) Veröffentlichungstag der Anmeldung: 08.08.2007
(73) Patentinhaber: PLÜMAT PLATE & LÜBECK GMBH & CO, 32339 Espelkamp (DE)
(72) Erfinder: PULLER, Stefan, 32339 Espelkamp (DE); MUTH, Friedrich, 32339 Espelkamp (DE)
(74) Vertreter: Harrison, Robert John
(86) Internationale Anmeldenummer: PCT/EP2005/011028
(87) Internationale Veröffentlichungsnummer: WO 2006/042692

(56) Entgegenhaltungen:
- DE-U1- 20 214 638
- US-A- 5 976 300
- PATENT ABSTRACTS OF JAPAN Bd. 1995, Nr. 02, 31. März 1995 (1995-03-31) -& JP 06 320644 A (MATERIAL ENG TECH LAB INC), 22. November 1994 (1994-11-22)
- PATENT ABSTRACTS OF JAPAN Bd. 2002, Nr. 07, 3. Juli 2002 (2002-07-03) -& JP 2002 067193 A (HINOKI KIKAI SANGYO:KK; KAI SHIGEO), 5. März 2002 (2002-03-05)
- PATENT ABSTRACTS OF JAPAN Bd. 1995, Nr. 04, 31. Mai 1995 (1995-05-31) -& JP 07 016956 A (OTSUKA PHARMACEUT FACTORY INC), 20. Januar 1995 (1995-01-20)
- PATENT ABSTRACTS OF JAPAN Bd. 2002, Nr. 02, 2. April 2002 (2002-04-02) -& JP 2001 269389 A (TERUMO CORP; NISSEI TECHNO KK), 2. Oktober 2001 (2001-10-02)

## Beschreibung

### Bezeichnung der Erfindung

Kunststoffbeutel mit einem oder mehreren Ports sowie Herstellungsverfahren für Kunststoffbeutel

### Gebiet der Erfindung

Die vorliegende Erfindung liegt auf dem Gebiet der Kunststoffverarbeitung. Insbesondere betrifft die vorliegende Erfindung einen Kunststoffbeutel mit einem oder mehreren Ports, ein Kunststoffelement für einen Port sowie ein Verfahren zur Herstellung eines Kunststoffbeutels.

### Hintergrund der Erfindung

Kunststoffbeutel, häufig in Form von Folienbeuteln, werden im Bereich der Medizin eingesetzt. Ihre Verwendungsmöglichkeiten sind vielfältig. Kunststoffbeutel können zur Aufnahme von Infusionslösungen dienen und werden unter anderem auch für die Aufbewahrung von Blut (Blutkonserven) und die Aufbewahrung von sterilen medizinischen Flüssigkeiten benutzt. Kunststoffbeutel benötigen Befüllungs- und Entnahmesysteme, die als sogenannte Ports ausgeführt sind. Kunststoffbeutel können je nach Verwendungszweck einen, zwei oder mehrere Ports aufweisen. Jeder Port kann, je nach vorgesehener Verwendungsart, eine spezielle Formgebung und/oder individuelle Konstruktionsbestandteile haben.

Verfahren zum Herstellen eines Ports in einem Kunststoffbeutel sind z.B. aus der DE 196 34 944 C1 und der DE 199 58 952 A1 bekannt Dort werden Herstellungsverfahren beschrieben, bei denen ein einstückiges Einsatzstück aus Kunststoff in den Randbereich eines aus zwei übereinanderliegenden Kunststofffolien gebildeten Kunststoffbeutels eingeschweißt wird. Das Einsatzstück besteht aus einem massiven Stück Kunststoff von ausreichender Querschnittsgröße, sodass in dem Einsatzstück wahlweise ein, zwei oder mehrere Ports mit jeweils zylinderförmig kreisrundem Durchströmungsquerschnitt unterzubringen sind.

Damit solche massiven, relativ großen Einsatzstücke zwischen den Rändern der Wandfolien eines Kunststoffbeutels eingeschweißt werden können, besitzen Sie eine abgeflachte Querschnittsform, die sich zwischen den Schweißrändern der Wandfolien des Kunststoffbeutels erstreckt und zwischen den Schweißrändern der Wandfolien spitzendig ausläuft ("Schiffchenform"), um in diesem "Zwickelbereich" beim Zufahren der Formandruckflächen einer sich schließenden zweigeteilten Werkzeugschweißform dichte Schweißverbindungen einerseits zwischen den Schweißflächen des Einsatzstücks und den Schweißrändern der Wandfolien des Kunststoffbeutels und andererseits (benachbart zu dem Einsatzstück) zwischen den Schweißrändern der sich jeweils gegenüberliegenden Wandfolien des Kunststoffbeutels zu erhalten.

Das gilt unabhängig davon, ob die Kunststoffbeutel aus zwei übereinanderliegenden Folienbahnen mit umlaufenden Schweißrändern hergestellt werden oder aus einer Schlauchfolie hergestellt werden, bei der die Schweißnähte an den Längsseiten der Wandfolien des Kunststoffbeutels entfallen. Das Ziel der Herstellungsverfahren für Kunststoffbeutel mit eingeschweißten Ports ist es, die Beutel einfach und in großer Stückzahl zu geringem Preis herstellen zu können (vgl. DE 196 349 44 C1). Dabei müssen die meist nur einmal verwendbaren Kunststoffbeutel dennoch hohen Anforderungen hinsichtlich Dichtheit und Sterilität bzw. Sterilisierbarkeit genügen.

Bisher ist es nur schwer gelungen, beim Einschweißen der bekannten Port-Einsatzstücke im Zwickelbereich zwischen dem spitzendig auslaufenden Einsatzstück und den Schweißrändern der Wandfolien eine hohe Dichtigkeit der Schweißverbindungen zu erhalten. Das erklärt sich unter anderem aus der geforderten hohen Produktionsleistung des Herstellungsverfahrens, bei dem im Regelfall für den Schweißvorgang Werkzeugschweißvörrichtungen mit Mehrfachformen verwendet werden (d. h. mehrere, jeweils mit Port-Einsatzstücken zu verschweißende Kunststoffbeutel liegen parallel nebeneinander in derselben Werkzeugschweißform und werden in einem Arbeitstakt verschweißt), wobei das Öffnen der Werkzeugschweißform sehr schnell und zeitnah nach dem Schweißvorgang erfolgt, sodass sich noch nicht hinreichend abgekühlte Schweißnähte beim Öffnen der Werkzeugschweißform wieder aufziehen können.

Soll der Kunststoffbeutel in einem Arbeitsgang verschweißt werden, so ergibt sich zusätzlich durch die Dicke des Einsatzstückes ein sogenannter Dünnzieheffekt. Die zwei Lagen flach liegender Folie müssen das Einsatzstück umschließen und werden daher beim Zusammendrücken durch die Presswerkzeuge im Bereich des Einsatzstückes aüseinandergezogen.

Es wurden verschiedene Lösungsansätze vorgeschlagen, mit denen der Schwächung im Zwickelbereich und dem Dünnzieheffekt entgegengewirkt werden soll. In der Offenlegungsschrift DE 25 21 475 (Fresenius) wird ein flügelformiger Fortsatz an einem zylindrischen Stutzen oder Schlauch als Kunststoffelement zum Einsetzen zwischen zwei Kunststofffolien vorgeschlagen. Durch eine geringere Materialstärke im Bereich des Flügels kann der Stutzen dann flach gedrückt werden, was den Dünnzieheffekt vermindert.

Nachteilig bei der Fresenius-Schrift DE 25 21 475 ist die Notwendigkeit der Formgebung für das Kunststoffelement mit flügelförmigen Fortsätzen. Die flügelförmigen Fortsätze haben höheren Materialaufwand für das Kunststoffelement zur Folge. Durch die flügelförmigen Fortsätze wird der Portschweißbereich insgesamt vergrößert und die Flexibilität des Beutels im Bereich der Flügel verringert

In der deutschen Patentanmeldung DE 103 419 10 A1 bzw. der dazu korrespondierenden deutschen Gebrauchsmusterschrift DE 202 14 638 U1 (Reinhold) wird eine flexible, dünnwandige Formgebung des Ports mit einem sogenannten "elliptischen" Querschnitt im Portschweißbereich zur Lösung vorgeschlagen. Durch Einsatz eines durch dünne Wände flexiblen Kunststoffelements soll dem Dünnzieheffekt entgegengewirkt werden. Dies geschieht in ähnlicher Weise wie in der Fresenius-Schrift DE 25 21 475, indem das Kunststoffelement beim Schweißvorgang flach gedrückt werden kann. Beim elliptischen Querschnitt sorgt ein keilförmiges Zusammenlaufen am Rand für verbesserte Stabilität der Schweißverbindung am Übergang vom Port zum Kunststoffbeutel. Die Reinhold-Anmeldeschrift betont die Notwendigkeit eines flexiblen Ports und beschreibt die Vorteile eines separaten Füllzugangs für den Beutel.

Durch die in der Reinhold-Schrift DE 202 14 638 U1 vorgegebene Lösung entstehen Probleme in der Stabilität des Durchgangs. Der Port kann in seinem flexiblen, elliptischen Bereich leicht zusammengedrückt und abgeknickt werden, was zu einem unbeabsichtigten Verschluss des Kunststoffbeutels führen kann. Dadurch, dass die Flexibilität sowie das Wiederauseinandergehen des Ports nach dem Zusammenpressen lediglich durch die Wandstärke und Materialwahl erreicht werden muss, ist man hierfür bei der Auswahl geeigneter Werte für Wandstärke und bei der Auswahl des Materials stark eingeschränkt.

Auch die deutsche Patentschrift DE 697 13 051 T2 bzw. dazu korrespondierende U.S. Patentschrift US 5,976,300 (Baxter International) hat als Lösungsansatz zur Vermeidung des Dünnzieheffektes das Zusammendrücken des Kunststoffelements mit dem der Port realisiert werden soll. Bei der Baxter-Patentschrift DE 697 13 051 T2 wird ein gerundetes Element flach zusammengedrückt Als gerundetes Element dient bevorzugt ein Schlauch, um komplexere Herstellungsverfahren, wie Spritzgusstechnik, zu vermeiden. Durch das flache Zusammendrücken kann der Dünnzieheffekt vermieden werden. Die Baxter-Patentschrift DE 697 13 051 T2 erwähnt die grundsätzliche Möglichkeit des Einsatzes anderer als runder Querschnittsformen für den Schlauch, als Beispiele werden ovale oder polygonale Querschnitte angegeben. Diese Formen werden in der Baxter-Patentschrift DE 697 13 051 T2 jedoch nicht weiter beschrieben und sind immer als Abwandlungen eines gerundeten Elements zu sehen.

Die Baxter-Patentschrift DE 697 13 051 T2 bietet, wie die Reinhold-Schrift DE 202 14 638 U1, keine zusätzlichen Vorkehrungen die beim Wiederauseinandergehen des gerundeten Elements nach dem Zusammenpressen die Schwachstelle des Übergangs verstärken oder entstehende Spannungen in diesem Bereich vermindern. Die oben beschriebene Problematik des leichten Abknickens ist bei der Baxter-Patentschrift DE 697 13 051 T2 wie bei der in der Reinhold-Schrift DE 202 14 638 U1 vorhanden.

Aus der Zusammenfassung des japanischen Patentdokuments JP 06 320644 A (Material Eng Tech Lab) ist eine Vorrichtung zur Herstellung von Kunststoffbehältern bekannt. Dabei wird ein dünnes, plattenförmiges Wärmemedium mittels Hochfrequenzinduktion erwärmt, um es für einen Verschweißvorgang einzusetzen. Die zu verschweißenden Komponenten, d.h. Außenwände sowie ein Portelement des Kunststoffbehälters werden dabei zusammen mit dem Wärmemedium in entsprechende Aussparungen bzw. Formen gelegt Nach einem Aneinanderdrücken der Aussparungen bzw. Formen mit den darin befindlichen Komponenten für den zu fertigenden Kunststoffbehälter erfolgt sodann mittels Hochfrequenzinduktionsspulen ein Erwärmen des Wärmemediums, welches zu Folge hat, dass die Komponenten des Kunststoffbehälters miteinander an entsprechenden Stellen unter Zuhilfenahme von Klebstoffen verschweißt werden.

Aus der Zusammenfassung einer weiteren japanischen Patentschrift JP 2002 067193 A (Hinoki Kikai Sangyo) ist ein Beutel mit einem Port bekannt, dessen beutelseitiger Körper einen rautenförmigen Grundriss aufweist und im oberen Randbereich zwischen der ersten und der zweiten Seitenwand angeordnet ist. Der Beutel umfasst an seinen beiden oberen äußeren Seitenbereichen ein Band zum Aufhängen des Beutels, welches sich von dem einen Bereich zu dem anderen Bereich erstreckt. Ferner wird in dieser Patentschrift die Integration bzw. Herstellung dieses Bands an den Beutel bzw. zusammen mit dem Beutel beschrieben.

### Kurzfassung der Erfindung

Aufgabe der Erfindung ist es, einen verbesserten Kunststoffbeutel mit einem oder mehreren Ports, ein verbessertes Kunststoffelement für einen oder mehrere Ports sowie ein verbessertes Verfahren zum Herstellen eines Kunststoffbeutels mit einem oder mehreren Ports zu ermöglichen. Die Verbindungsstelle von Kunststoffbeutel und Port ist dabei dicht schließend und belastbar. Das Kunststoffelement ist für den Beutel und das Herstellungsverfahren angepasst. Das Herstellungsverfahren für die Kunststoffbeutel ermöglicht höhere Ausbeuten bei gleichzeitig hohen Produktionsdurchsätzen.

Eine weitere Aufgabe der Erfindung ist es, ein Abknicken des Kunststoffelements zu verhindern. Ein unbeabsichtigter Verschluss des Ports wird erschwert.

Diese und andere Aufgaben werden erfindungsgemäß durch einen Kunststoffbeutel aus einer Kunststoffolie mit einem oder mehreren Ports erfüllt Mindestens einer dieser Ports umfasst ein Kunststoffelement, das zwischen zwei Lagen Kunststofffolie eingeschweißt ist und dabei einen Portschweißbereich bildet. Im Portschweißbereich ist das Kunststoffelement flach zusammendrückbar. Der Querschnitt des unbelasteten, nicht zusammengedrückten, Kunststoffelements verläuft in Richtung hin zu seitlichen Rändern des Portschweißbereichs keilförmig. Das Kunststoffelement umfasst im Portschweißbereich mindestens eine erste Kante. Der Querschnitt an den seitlichen Rändern des Portschweißbereichs bildet zweite Kanten.

Dadurch, dass das Kunststoffelement flach zusammendrückbar ist, kann der beschriebene Dünnzieheffekt im Portschweißbereich vermieden oder verringert werden. Der im seitlichen Portschweißbereich keilförmige Querschnitt verhindert oder verringert das Entstehen von Spannungen im Zwickelbereich des Aufeinandertreffens der Kunststofffolien Solche Spannungen können entstehen, wenn z.B. ein rundes Element nach dem Flachdrücken wieder in seine runde Form zurückfedert und dabei den Zwickelwinkel stark vergrößert.

Mindestens eine erste Kante im Kunststoffelement sorgt für verbesserte Stabilität des Kunststoffelements, ein Abknickten ist schwerer möglich. Die ersten Kanten ermöglichen auch ein verbessertes Wiederauseinandergehen des Kunststoffelements nach dem Flachdrücken. Darüber hinaus erhöhen die ersten Kanten die Freiheit bei der Gestaltung des Kunststoffelements hinsichtlich der Materialauswahl und der benötigten Wandstärke des Kunststoffelements im Portschweißbereich.

Bevorzugt verläuft die eine oder die mehrere ersten Kanten des Kunststoffelements im Portschweißbereich im Wesentlichen parallel zu den seitlichen Rändern des Portschweißbereichs. Im Wesentlichen parallel kann dabei leicht geneigt zur Kunststoffbeutelebene bedeuten. Im Wesentlichen parallel kann auch, z.B. bei divergenten seitlichen Rändern des Portschweißbereichs, in Richtung einer Mittellinie der divergenten seitlichen Ränder des Portschweißbereichs bedeuten. Eine derartige Ausführung ermöglicht einfach zu realisierende Formgebungen für das Kunststoffelement.

Eine oder mehrere abgerundete erste Kanten sind produktionstechnisch, z.B. in einem Spritzgussverfahren, leicht herzustellen und erleichtern das Flachdrücken des Kunststoffelements. Abgerundete Kanten können auch in Form einer Biegung des Materials des Kunststoffelements realisiert werden, wobei an der Biegung im Wesentlichen ebene Flächen zusammentreffen.

Wie bereits erläutert, kann der Querschnitt des Kunststoffstücks bzw. Kunststoffelements im Bereich der seitlichen Ränder des Portschweißbereiches als zweite Kanten ausgebildet sein.

Spitz zulaufende zweite Kanten sind vorteilhaft, da sie im Zwickelbereich ein enges Anliegen der Kunststofffolie an das Kunststoffelement ohne Materialanhäufungen während des Schweißvorgangs ermöglichen. Beim Auseinandergehen des Kunststoffelements vom flachgepressten Zustand wird das Entstehen von Spannungen vermieden oder verringert. Beim Verschweißen der Kunststofffolien an das Kunststoffelement ist ein enges Anliegen der Kunststofffolie an das Kunststoffelement, wenn keine Rundungen im Zwickelbereich vorhanden sind, leichter zu realisieren.

Abgerundete zweite Kanten können für das Herstellungsverfahren des Kunststoffelements von Vorteil sein, z.B. beim Spritzguss von zähflüssigen Kunststoffen.

Die zweiten Kanten des keilförmigen Querschnitts im Bereich der seitlichen Ränder des Portschweißbereichs können so ausgebildet werden, dass sich die zweiten Kanten, insbesondere die Form der Außenseite des Kunststoffelements in diesem Bereich, beim Zusammendrücken nicht verändern. Beim Auseinandergehen des Kunststoffelements entsteht durch die Formstabilität in diesem kleinen Bereich der Kante keine Bewegung und keine Materialspannungen. Dadurch wird die Bildung von Undichtigkeiten im Zwickelbereich vermieden oder verringert.

Eine einfache und dadurch produktionstechnisch leicht herzustellende Form des Kunststoffelements hat einen im Wesentlichen rhombusförmigen Querschnitt im Portschweißbereich. Die Rhombusform umfasst zwei zweite Kanten in den Zwickelbereichen und zwei erste Kanten, die unter anderem für die Stabilität des Kunststoffelements sorgen können.

Für Kunststoffelemente, die einen breiten Zugang bieten sollen, bietet sich eine sechseckige Form des Querschnitts an. Zwei zweite Kanten in den Zwickelbereichen erleichtern das Verschweißen. Vier ersten Kanten sorgen für Stabilität. Mit einem geraden Bereich parallel zur Beutelebene zwischen zwei der ersten Kanten kann die Breite des Zugangs eingestellt werden.

Für das Flachdrücken des Kunststoffelements im Portschweißbereich ist es vorteilhaft, wenn das Kunststoffelement abgeflacht ausgebildet ist. Der Querschnitt des Kunststoffelements ist dabei senkrecht zur Beutelebene niedriger als in der Beutelebene.

Ein bevorzugtes Herstellungsverfahren für das Kunststoffelement ist die Spritzgusstechnik, mit der günstig eine Vielzahl geformter Kunststoffelemente hergestellt werden können.

Als Material kann das Kunststoffelement Polyolefine umfassen. Bevorzugt wird Polypropylen eingesetzt.

Als Material kann die Kunststofffolie Polyolefme, Polyamid oder Polyester umfassen. Bevorzugt wird eine 3-lagige Schicht aus Polypropylen und/oder Polypropylenkopolymeren als Kunststofffolie eingesetzt. Die Schicht, die im Beutel die innere Schicht darstellt, besitzt bevorzugt den niedrigsten Erweichungspunkt bzw. die niedrigste Schmelztemperatur.

Bei Anwendungen im medizinischen Bereich ist es vorteilhaft, wenn der Port abklemmbar ist. Dies kann durch eine Ausbildung des Kunststoffbeutels erreicht werden, bei der ein flexibler Teil des Kunststoffelements aus dem Kunststoffbeutel herausragt und mit einer Klemme abgeklemmt werden kann. Ein abklemmbarer Port erlaubt auch die einfache Befüllung des Kunststoffbeutels mit Stickstoff oder anderen Gasen, häufig bevorzugterweise inerte Gase. Dadurch kann der Kunststoffbeutel beispielsweise zum Befüllen mit Aminosäuren verwendet werden.

Für den Anschluss von Verbindungsteilen an den Port ist häufig eine kreisförmige Form des Kunststoffelements an seinem dem Kunststoffbeutel abgewendeten Ende gewünscht Die Kreisform kann durch einen ersten Übergangsbereich am Kunststoffelement sowohl im inneren Portquerschnitt als auch im äußeren Portquerschnitt realisiert werden. In einem zweiten Übergangsbereich oder auf der Länge des gesamten Kunststoffelements kann auch die innere Querschnittsfläche und/oder die äußere Querschnittsfläche vergrößert werden.

Durch eine vom Portschweißbereich zum Kunststoffbeutel abgewendeten Ende hin zunehmende Wandstärke, die eventuell auch nur in einem dritten Übergangsbereich zunimmt, kann die Stabilität des Kunststoffelements verstärkt werden.

Für die Handhabung, mögliche Anschlüsse von Verbindungen und den Einsatz von Verschlüssen ist eine Formstabilität des Kunststoffelements am Kunststoffbeutel abgewendeten Ende vorteilhaft.

Die Lehre der Erfindung umfasst, für das quer zu seiner Längserstreckung elastisch einfedernde, geformte Kunststoffelement ein Kunststoffmaterial mit einer geeigneten Wandstärke auszuwählen, das einerseits ausreichende Verformungs-Rückstellkräfte aufweist und andererseits ein Schweißverhalten zeigt, bei dem die außen liegenden Schweißflächen des Kunststoffelements mit den Schweißrändern der Wandfolie des Kunststoffbeutels gut verschweißbar sind, jedoch die beim Schweißvorgang in Berührungskontakt miteinander liegenden inneren Wandflächen des Kunststoffelements nicht miteinander verkleben oder verschweißen. Das gelingt z.B. mit Polypropylen Kunststoffelementen mit einer Wandstärke von ca. 0,5 mm im Portschweißbereich. Für das Schweißverfahren können alle mit ihrer Wärmebelastung gut zu regelnden bekannten Kunststoffschweißverfahren verwendet werden, wie z.B. die üblichen Wärmekontaktverfahren oder ein Laserschweißverfahren.

Der Port kann in einem einstückigen Verbund mit nur einem Kunststoffelement realisiert werden. Auch mehrteilige Lösungen, bei denen Verbundstücke verwendet werden, sind denkbar.

Kunststoff-Spritzgussteile können besonders kostengünstig produziert werden. Bei einem solchen Port, der mit Spritzgusstechnik hergestellte Kunststoffelemente umfasst, ist das formstabile Kopfstück für jede bekannte Verwendungsart herzurichten und zu benutzen. Beispielsweise kann im oder am Kunststoffelement eine mit einer Injektionsnadel durchstechbare Membran angebracht sein und/oder ein durchstechbares Septum. Der Port kann mit einer auf das Kunststoffelement aufsetzbaren Kappe verschließbar sein, wobei der elastisch einfedernde Bereich des Kunststoffelements im Portschweißbereich voll funktionsfähig bleibt.

Die aufsetzbare Kappe kann mit einer Verdrehsicherung ausgestattet sein. Diese kann durch die Formgebung der Kappe sowie des Kunststoffelements realisiert werden. Vorzugsweise wird die Verdrehsicherung durch Zapfen, sogenannte Rastnasen, und korrespondierende Aussparungen, gebildet.

In eine Dichtung können von einer oder von beiden Seiten Lippen, lippenförmig ausgebildete Wülste und/oder Kanten, eindrücken um die Dichtheit des Kunststoffbeutels durch die Kappe zu verbessern. In einer Ausführungsform kann auf die Dichtkante eine Membran aus Polypropylen oder Polyethylen aufgeschweißt werden, sodass Kontakt zwischen dem pharmazeutischen Produkt und dem Dichtmaterial vermieden wird.

Eine besonders zweckmäßige Ausführungsform der Erfindung sieht vor, dass zwischen dem formstabilen und dickwandig gespritzten Kopfstück am beutelabgewendeten Ende des Ports und dem elastisch federnden Bereich des Kunststoffelements des Ports eine Übergangszone mit sich verjüngenden Wandstärken des Kunststoffelements vorhanden ist. Durch die Verformungs-Rückstellkräfte der Übergangszone mit sich verjüngenden Wandstärken unterstützt diese Formgebung beim Öffnen der Werkzeugschweißform das Zurückfedern des Kunststoffelements in seine offene Querschnitts-Ausgangsform.

Durch eine flexible Ausformung eines Kunststoffelements im Portschweißbereich kann das Kunststoffelement beim Verfahren zur Herstellung eines Kunststoffbeutels aus Kunststofffolie mit einem oder mehreren Ports, die ein Kunststoffelemente umfassen, von einem Presswerkzeug flach zusammengedrückt werden. Durch Erhitzen kann die Kunststofffolie mit dem Kunststoffelement verbunden werden. Die unbelastete Form eines Querschnitts des Kunststoffelements im Portschweißbereich verläuft zu den seitlichen Rändern des Portschweißbereichs hin keilförmig und umfasst mindestens eine erste Kante,. Durch die Formgebung des Kunststoffelements, einschließlich geeigneter Wandstärken und Materialien, wird das Auseinandergehen in eine der unbelasteten Ausgangsform im Wesentlichen entsprechende Form unterstützt.

Erfindungsgemäß wird ein Kunststoffelement beschrieben, das zur Ausbildung eines Ports an einem Kunststoffbeutel geeignet ist Das Kunststoffelement ist in einem Portschweißbereich, in dem es mit dem Kunststoffbeutel verbunden werden kann, im Wesentlichen flach zusammendrückbar. Der Querschnitt des unbelasteten Kunststoffelements verläuft in Richtung hin zu seitlichen Rändern des Portschweißbereichs keilförmig. Der Portschweißbereich des Kunststoffelements weist eine oder mehrere erste Kanten auf.

Bevorzugte Ausführungsformen des Kunststoffelements haben im Portschweißbereich einen rhombischen oder einen hexagonalen Querschnitt.

Erfindungsgemäß wird ein Verfahren beschrieben zur Herstellung eines Kunststoffbeutels aus einer Kunststofffolie mit einem oder mehreren Ports, die ein Kunststoffelement umfassen. Das Kunststoffelement wird dabei zwischen zwei Lagen der Kunststofffolie eingebracht. Die zwei Lagen der Kunststofffolie werden so zusammengepresst, dass sie das Kunststoffelement in einem Portschweißbereich umschließen. Die Kunststofffolie und das Kunststoffelement werden erhitzt und verschweißt Das Zusammenpressen erfolgt auf einer im Wesentlichen ebenen Unterlage und ein geformtes Presswerkzeug drückt von oben auf die Unterlage.

In einer Ausführungsform der Erfindung wird die Unterlage auf konstanter Temperatur gehalten. Vorteilhafterweise liegt die Temperatur unterhalb der Erweichungstemperatur des Materials der Kunststofffolie. Typische Temperaturen liegen hierbei bei ungefähr 100 °C.

Die Unterlage umfasst vorteilhafterweise einen oder mehrere Einsätze. Die Einsätze der Unterlage sind an Stellen positioniert, auf denen das eine oder mehrere Kunststoffelemente an den oder die Kunststoffbeutel angebracht werden sollen. Der Einsatz kann separat von der Unterlage beheizt werden und auf eine höhere Temperatur, z.B. 140 °C, als die Unterlage eingestellt werden. Dadurch kann der Schweißprozess am Portschweißbereich unterstützt werden. Der Einsatz umfasst vorteilhafterweise eine Vertiefung. Die Vertiefung gleicht beim Zusammendrücken der Kunststofffolien und des Kunststoffelements die Dicke des zusammengedrückten Kunststoffelements zumindest teilweise aus.

Das Presswerkzeug kann ebenfalls auf einer konstanten Temperatur gehalten werden. Die Temperatur des Presswerkzeugs liegt vorteilhaft über der Schmelztemperatur des Materials der Kunststofffolie. Typische Temperaturen liegen hierfür bei etwa 140°C.

Durch das Kunststoselement erhält der Kunststoffbeutel eine relativ unempfindliche und gut zu fassende Stelle für ein automatisches Greifsystem. Vorteilhaft für das Herstellungsverfahren ist es, wenn ein Kunststoffbeutel nach dem Verschweißen lediglich am Außenbereich des einen oder der mehreren Kunststoffelemente erfasst wird.

### Beschreibung der Zeichnung

Fig. 1 zeigt in perspektivischer Darstellung einen Teil eines Beutels mit einem Port, der ein eingeschweißtes Kunststoffelement umfasst.
Fig. 2 zeigt in perspektivischer Darstellung das Kunststoffelement aus Fig. 1.
Fig. 3 zeigt das Kunststoffelement aus Fig. 1 in einem Längsschnitt senkrecht zur Beutelebene.
Fig. 4 zeigt das Kunststoffelement aus Fig. 1 in einem Längsschnitt in der Beutelebene des Ports.
Fig. 5 zeigt einen für das Kunststoffelement aus Fig. 1-4 geeigneten Verschluss in Form eines Deckels; a) in Form einer perspektivischen Darstellung, b) in Form eines Schnittes.
Fig. 6 zeigt den Fertigungsablauf beim Einschweißen des Ports.

### Detaillierte Erfindungsbeschreibung:

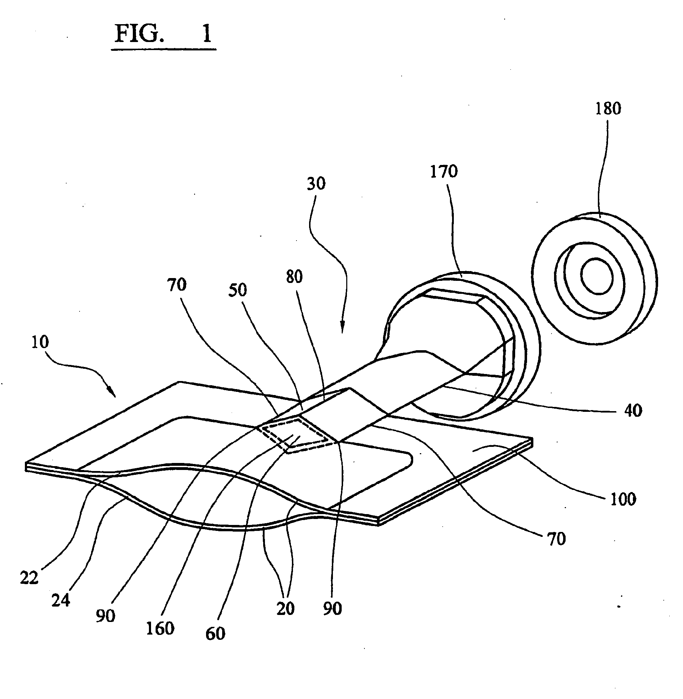

Fig. 1 zeigt perspektivisch als Beispiel einen Kunststoffbeutel 10 mit einem Port 30, der ein Kunststoffelement 40 umfasst. Der Kunststoffbeutel 10 hat eine typische Breite im Bereich von ungefähr 10 bis 15 cm und eine Länge von etwa 15 bis 20 cm. Das Kunststoffelement 40 ist zwischen zwei Lagen 22, 24 Kunststofffolie 20 eingeschweißt Als Kunststofffolie 20 dient eine dreischichtige Polypropylenfolie. Die zum Beutelinneren gerichtete Schicht hat die niedrigste Erweichtemperatur und/oder Schmelztemperatur, sodass ein Verschweißen der Kunststofffolien 20 geschehen kann, ohne dass die Kunststofffolie 20 an Herstellungswerkzeugen kleben bleibt. Die mittlere Schicht kann als Barrierenschicht dienen. Die beim Kunststoffbeutel 10 außen liegende Schicht kann als Schutzschicht dienen. Die Dicke der Kunststofffolie 20 liegt im Bereich von ungefähr 0,1 - 1 mm. Die Kombination der Schichten für die Kunststofffolie 20 erlaubt ein Sterilisieren der Kunststofffolie 20.

An der Verschweißstelle von Kunststofffolie 20 und Kunststoffelement 40 bildet sich der Portschweißbereich 50 aus. Der dargestellte Querschnitt 60 des Kunststoffelements 40 im Portschweißbereich 50 ist rhombisch. Die Breite, d.h. die Ausdehnung in der Beutelebene 100, des Kunststoffelements 40 im Portschweißbereich 50 ist etwa 1 cm. Die Höhe des Kunststoffelements 40 im Portschweißbereich 50 ist etwa 0,5 cm. Zwei erste Kanten 80 sind abgerundet ausgeprägt. Zwei zweite Kanten 90 in den Zwickelbereichen sind spitz ausgeprägt und sorgen so für das enge, spannungsfreie Anliegen der Kunststofffolie 20 an das Kunststoffelement 40. Das Kunststoffelement ist ca. 3 bis 5 cm lang. Vom flexiblen ersten Portende 160 zum formstabilen zweiten Portende 170 nimmt die Fläche sowohl des inneren Portquerschnitts 110 wie auch des äußeren Portquerschnitts 120 zu, wobei die Zunahme nicht stetig sein muss. Die Wandstärke nimmt vom ersten Portende 160 zum zweiten Portende 170 ebenfalls zu. Auch die Zunahme der Wandstärke muss nicht stetig verlaufen, die Wandstärke kann konstant bleiben oder für einen kurzen Bereich wieder abnehmen, um eine Einrastvorrichtung für einen Verschluss, z.B. eine Kappe 180, zu bilden. Die Wandstärke des Kunststoffelements 40 beträgt im Portschweißbereich 50 ca. 0,5 bis 1 mm und nimmt auf über 2 mm zu. Ein Kopfstück des Kunststoffelements 40 am zweiten Portende 170 ist kreisförmig ausgebildet In einem ersten Übergangsbereich 130 wird der Übergang vom rhombischen Querschnitt zur Kreisform realisiert. Das Kopfstück des Kunststoffelements 40 am zweiten Portende 170 hat einen Durchmesser von 1,5 bis 2 cm. Das Kunststoffelement 40 ist in dieser Ausführungsform mit einem Spritzgussverfahren aus Polypropylen gefertigt.

Die Breite der "Schweißnaht", des Bereichs in dem die beiden Kunststofffolien 20 miteinander verschweißt sind und auch des Portschweißbereichs 50 variiert zwischen ungefähr 5 und 10 mm.

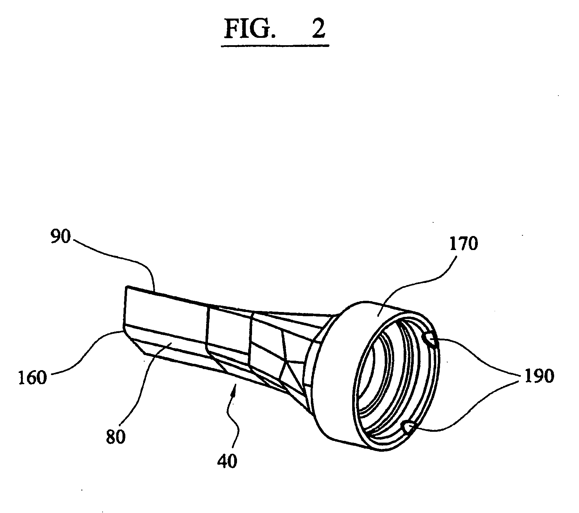

Die Fig. 2, 3 und 4 zeigen das Kunststoffelement 40 aus, Fig. 1 in perspektivischer Darstellung sowie in zwei Längsschnitten.

In Fig. 2 sind zwei von vier Aussparungen 190 für Rastnasen 200 einer Kappe 180 im Kopfstück des Kunststoffelements 40 gut sichtbar. Diese Aussparungen 190 nehmen beim Einrasten einer Kappe 180 die an der Kappe 180 befindlichen Rastnasen 200 auf und können so eine Orientierung der Kappe 180 bewirken bzw. die Kappe 180 in dieser Orientierung halten und als Verdrehsicherung dienen. Ebenfalls im Kopfstück erkennbar sind Vorrichtungen, die ein Einrasten der Kappe 180 bewirken. Eine Lippe 210, die gegen eine Dichtung gepresst werden kann ist im Innenraum des Kopfstücks erkennbar. Am ersten Portende 160 des Kunststoffelements 40 ist der Übergang von zwei flächigen Elementen in eine abgerundete erste Kante 80 erkennbar. Ebenfalls sichtbar ist eine der zweiten Kanten 90, die sich in Richtung des ersten Portendes 160 des Kunststoffelements 40 aufspaltet

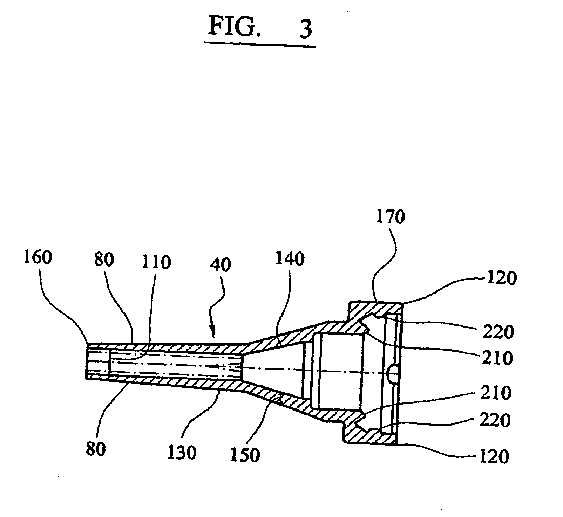

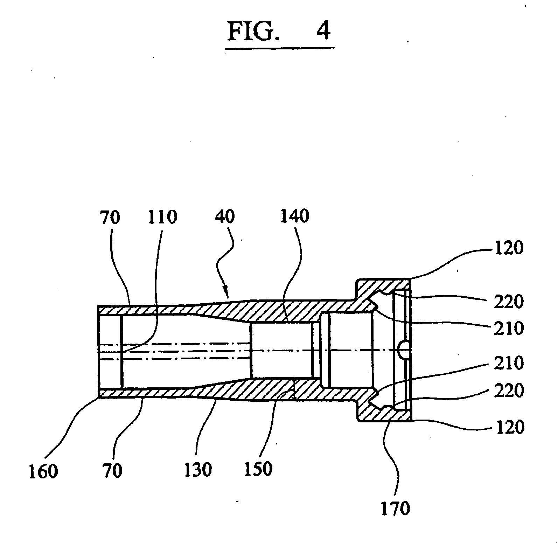

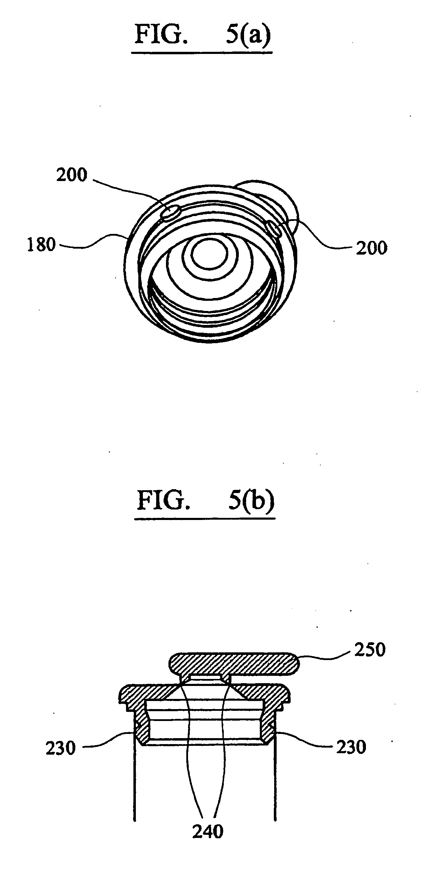

In den beiden Längsschnitten in den Fig. 3 und 4 ist die Erweiterung des inneren Portquerschnitts 110 und des äußeren Portquerschnitts 120 dargestellt. Wie unter Fig. 1 beschrieben nimmt die Wandstärke von etwa 0,5 mm im Portschweißbereich 50 auf einer Länge von ungefähr 40 mm auf bis zu etwa 2 mm am Kopfstück des Kunststoffelements 40 zu. Die in Fig. 2 erkennbare ringförmige Lippe 210 zur Abdichtung gegen eine zwischen Kopfstück und eine Kappe eingebrachte Dichtung ist als am Boden des Kopfstücks des Kunststoffelements 40 hervorstehender Wulst in den Längsschnitten deutlich. An den inneren Seiten des Kopfstücks sind hervorstehende Einrastvorrichtungen 220 zu sehen. Entsprechend angepasst geformte Wülste 230 an einer Kappe 180 (vgl. Fig. 5) können hinter die Einrastvorrichtungen 220 fassen und so für eine dicht sitzende Kappe 180, die auf eine Dichtung gepresst wird sorgen. Aus den beiden Längsschnitten in Fig. 3 und 4 wird auch die Abflachung des Kunststoffelements 40 im Portschweißbereich 50 deutlich.

In Fig. 5 ist sowohl eine perspektivische Darstellung a) als auch eine Schnittzeichnung b) einer als Verschluss dienenden Kappe 180 für den in Fig. 1-4 dargestellten Port 30 gezeigt. Die Rastnasen 200, die in die entsprechenden Aussparungen 190 eingreifen und damit die Orientierung der Kappe 180 vorgeben und Verdrehungen verhindern sind dargestellt. Ebenfalls, insbesondere in der Schnittzeichnung Fig. 5 b), gut zu erkennen sind die Elemente 230, welche die in Fig. 3 und 4 dargestellten Einrastvorrichtungen 220 hintergreifen. Eine solche Kappe 180 kann mit einem Spritzgussverfahren aus Polypropylen hergestellt werden. Die Kappe 180 ist mit einer Sollbruchstelle 240 ausgeführt, an der ein henkelförmiges Kunststoffteil 250 abgebrochen werden kann. Ist eine flächige Dichtung in der Kappe eingebracht, so kann die Dichtung nach Abbrechen des henkelförmigen Kunststoffstücks 250 mit einer Kanüle durchstoßen werden.

Der Port 30 kann auch durch eine nicht dargestellt Klemme abgeklemmt werden. In diesem Fall wird das Abklemmen durch ein Überstehen des im Portschweißbereich zusammendrückbaren Bereichs ermöglicht werden.

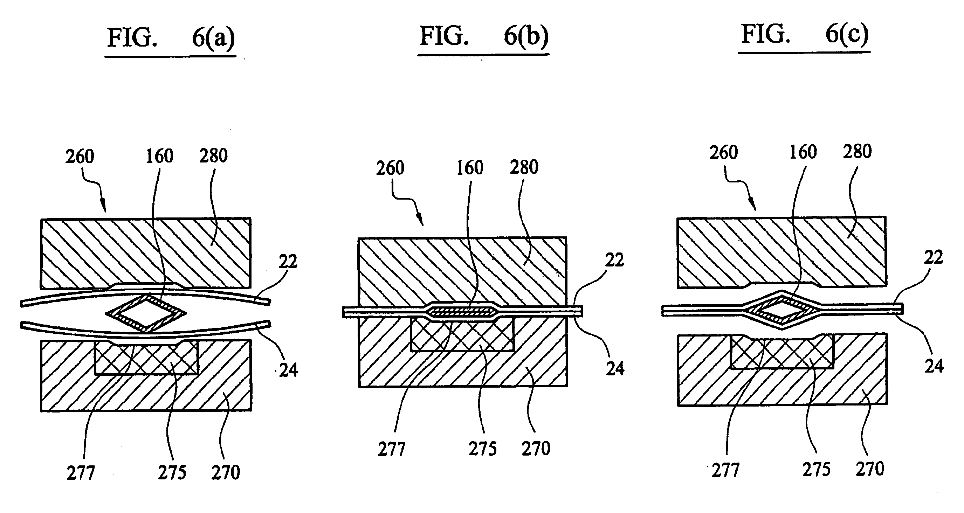

In Fig. 6 ist ein Schema des Herstellungsverfahrens für einen Kunststoffbeutel 10 angegeben. Das flexible erstes Portende 160 wird zwischen zwei Lagen 22, 24 einer Kunststofffolie 20 eingebracht Ein Werkzeug 260 drückt das erste Portende 160 flach und presst die zwei Lagen 22, 24 der Kunststofffolie 20 auf das erste Portende 160. Durch die spitzen zweiten Kanten 90 kann die Kunststofffolie 20 flach am ersten Portende 160 anliegen. Durch das Flachdrücken muss die Kunststofffolie 20 im Portschweißbereich 50 nicht ausgedehnt werden. Durch Erhitzen werden die Kunststofffolie 20 und das erste Portende 160 miteinander verbunden. Nach dem Auseinanderfahren des Werkzeugs 260 geht das erste Portende 160 im Wesentlichen in seine ursprüngliche Querschnittsform, die es vor dem Schweißvorgang eingenommen hatte, zurück.

Erfindungsgemäß ist weiterhin ein Herstellungsverfahren bei dem das Werkzeug 260 zum Zusammendrücken und Verschweißen eine im Wesentlichen ebene Unterlage 270 umfasst. Auf der Unterlage 270 liegt eine Lage 22 der Kunststofffolie 20 auf und ein geformtes Presswerkzeug 280 drückt von oben die zweite Lage 24 der Kunststofffolie 20 an das erste Portende 160 des Ports 30 an und drückt die zweite Lage 24 der Kunststofffolie 20 auf die erste Lage 22 der Kunststofffolie 20. Bei der bevorzugten Ausführungsform wird die Unterlage 270 auf einer konstanten Temperatur von ungefähr 100 °C gehalten. Die Temperatur liegt damit unterhalb der Erweichtemperatur des Materials der Kunststofffolie 20. In der Unterlage 270 ist ein Einsatz 275 eingefügt. Der Einsatz 275 ist getrennt von der Unterlage 270 beheizbar. Der Einsatz 270 wird auf eine Temperatur oberhalb der Schmelztemperatur des Materials der Kunststofffolie 20 gebracht und gehalten. Der Einsatz 275 umfasst eine Vertiefung 277 zum Höhenausgleich bei zusammengefahrenem Werkzeug 260. Das Werkzeug 260 ist bevorzugt mit einem Schneidwerkzeug als kombiniertes Schweiß/Schneidwerkzeug ausgeführt.

Das von oben kommende Presswerkzeug 280 hat eine konstante Temperatur von 140 °C und liegt damit oberhalb der Schmelztemperatur der verwendeten Materialkombinationen. Nach dem Schweißvorgang können Kunststoffbeutel 10 am Port 30 von einem Greifer 279 gefasst und aus dem Werkzeug 260 herausgefahren werden
- 10: Kunststoffbeutel
- 20: Kunststofffolie
- 22: Erste Lage der Kunststofffolie
- 24: Zweite Lage der Kunststofffolie
- 30: Port
- 40: Kunststoffelement
- 50: Portschweißbereich
- 60: Querschnitt des Kunststoffelements im Portschweißbereich
- 70: Ränder des Portschweißbereichs
- 80: Erste Kante
- 90: Zweite Kante
- 100: Kunststoffbeutelebene
- 110: Innerer Portquerschnitt
- 120: Äußerer Portquerschnitt
- 130: Erster Übergangsbereich
- 140: Zweiter Übergangsbereich
- 150: Wandstärke
- 160: Erstes Portende
- 170: Zweites Portende
- 180: Kappe
- 190: Aussparungen
- 200: Rastnasen
- 210: Lippe
- 220: Einrastvorrichtungen
- 230: Einrastvorrichtungen hintergreifende Elemente
- 240: Sollbruchstelle
- 250: Henkelförmiges Kunststoffteil
- 260: Werkzeug
- 270: Unterlage
- 275: Einsatz
- 277: Vertiefung
- 279: Greifer
- 280: Presswerkzeug .

## Patentansprüche

1. Kunststoffbeutel (10) aus Kunststoffffolie (20) mit einem oder mehreren Ports (30), wobei mindestens ein Port (30) ein Kunststoffelement (40) umfasst, das
i) zwischen zwei Lagen (22, 24) der Kunststofffolie (20) eingeschweißt ist und dabei einen Portschweißbereich (50) bildet, wobei
ii) das Kunststoffelement (40) im Portschweißbereich (50) im Wesentlichen flach zusammendrückbar ist; und
iii) der Querschnitt (60) des unbelasteten Kunststoffelements (40) in Richtung hin zu seitlichen Rändern (70) des Portschweißbereichs (50) keilförmig zuläuft;
iv) der Portschweißbereich (50) eine oder mehrere erste Kanten (80) des Kunststoffelements (40) aufweist; und
wobei der Querschnitt (60) an den seitlichen Rändern (70) des Portschweißbereichs (50) zweite Kanten (90) bildet.

2. Kunststoffbeutel (10) nach Anspruch 1, wobei die eine oder mehrere ersten Kanten (80) im Portschweißbereich (50) im Wesentlichen parallel zu den seitlichen Rändern (70) des Portschweißbereichs (50) verlaufen.

3. Kunststoffbeutel (10) nach einem der Ansprüche 1 und 2, wobei die ersten Kanten (80) abgerundet sind.

4. Kunststoffbeutel (10) nach einem der Ansprüche 1 bis 3, wobei die zweiten Kanten (90) des Querschnitts (60) an den seitlichen Rändern (70) des Portschweißbereichs (50) spitz zulaufen.

5. Kunststoffbeutel (10) nach Anspruch 4, wobei die zweiten Kanten (90) des Querschnitts (60) an den seitlichen Rändern (60) der Portschweißbereiche (50) abgerundet sind.

6. Kunststoffbeutel (10) nach einem der Ansprüche 1 bis 5, wobei die Form der zweiten Kanten (90) des Querschnitts (60) im Bereich der seitlichen Rändern (70) des Portschweißbereichs (50) beim Zusammendrücken des Kunststoffelements (40) im Portschweißbereich (50) im Wesentlichen unverändert bleibt.

7. Kunststoffbeutel (10) nach einem der Ansprüche 1 bis 6, wobei der Querschnitt (60) des Kunststoffelements (40) im Portschweißbereich (50) im Wesentlichen rhombusförmig ist.

8. Kunststoffbeutel (10) nach einem der Ansprüche 1 bis 6, wobei der Querschnitt (60) des Kunststoffelements (40) im Portschweißbereich (50) im Wesentlichen sechseckig ist.

9. Kunststoffbeutel (10) nach einem der Ansprüche 1 bis 8, wobei die Breite des Querschnitts (60) des Kunststoffelements (40) im Portschweißbereich (50) in der Kunststoffbeutelebene (100) größer ist als die Höhe senkrecht zur Kunststoffbeutelebene (100).

10. Kunststoffbeutel (10) nach einem der Ansprüche 1 bis 9, wobei das Kunststoffelement (40) aus spritzgegossenem Kunststoff gefertigt ist.

11. Kunststoffbeutel (10) nach einem der Ansprüche 1 bis 10, wobei das Kunststoffelement (40) aus Polypropylen ist

12. Kunststoffbeutel (10) nach einem der Ansprüche 1 bis 11, wobei die Kunststofffolie (20) drei Schichten aus Polypropylen und/oder Polypropylenkopolymeren umfasst.

13. Kunststoffbeutel (10) nach einem der Ansprüche 1 bis 12, wobei der Port (30) abklemmbar ausgebildet ist.

14. Kunststoffbeutel (10) nach Anspruch 13 wobei das Abklemmen des Ports (30) in einem Portbereich erfolgen kann, der durch ein Überstehen des im Portschweißbereich (50) zusammendrückbaren Bereichs des Kunststoffelements (40) aus dem Kunststoffbeutel (10) gebildet wird.

15. Kunststoffbeutel (10) nach einem der Ansprüche 1 bis 14, wobei der Port (30) einen inneren Portquerschnitt (110) aufweist, der in einem ersten Übergangsbereich (130) von der Form im Portschweißbereich (50) zu einer Kreisform übergeht.

16. Kunststoffbeutel (10) nach einem der Ansprüche 1 bis 15, wobei der Port (30) einen äußeren Portquerschnitt (120) aufweist, der in einem zweiten Übergangsbereich (140) von der Form im Portschweißbereich (50) zu einer Kreisform übergeht

17. Kunststoffbeutel (10) nach einem der Ansprüche 1 bis 16, wobei der Port (30) einen äußeren Portquerschnitt (120) aufweist, wobei sich die Fläche des Querschnitts (60) vom Portschweißbereich (50) zum zweiten Portende (170) hin vergrößert.

18. Kunststoffbeutel (10) nach einem der Ansprüche 1 bis 17, wobei sich die Wandstärke (150) des Kunststoffelements vom ersten Portende (160) am Portschweißbereich (50) zum zweiten Portende (170) hin vergrößert.

19. Kunststoffbeutel (10) nach einem der Ansprüche 1 bis 18, wobei die Formstabilität vom zusammendrückbaren ersten Portende (160) im Portschweißbereich (50) zum zweiten Portende (170) hin zunimmt.

20. Kunststoffbeutel (10) nach einem der Ansprüche 1 bis 19, wobei einer oder mehrere Ports mit einer Membran verschlossen sind.

21. Kunststoffbeutel (10) nach einem der Ansprüche 1 bis 20, wobei das Kunststoffelement (40) im Bereich des zweiten Portendes (170) im Wesentlichen formstabil ist.

22. Kunststoffbeutel (10) nach einem der Ansprüche 1 bis 21, wobei der Port (30) verschließbar ist.

23. Kunststoffbeutel (10) nach Anspruch 22, wobei der Port (30) durch eine Kappe (180) auf dem Kunststoffelement (40) verschließbar ist.

24. Kunststoffbeutel (10) nach Anspruch 23, wobei die Kappe (180) beim Aufdrücken auf dem Kunststoffelement (40) einrastet.

25. Kunststoffbeutel (10) nach einem der Ansprüche 23 und 24, wobei die Kappe (180) mit einer Sicherung gegen das Verdrehen auf dem Kunststoffelement ausgestattet ist.

26. Kunststoffbeutel (10) nach Anspruch 25, wobei als Sicherung gegen das Verdrehen die geometrische Form von Kappe (180) und Kunststoffelement (40) dient.

27. Kunststoffbeutel (10) nach einem der Ansprüche 25 und 26 wobei als Sicherung gegen das Verdrehen eine Kombination aus einem oder mehreren Rastnasen (200) und Aussparungen (190) für die einen oder mehreren Rastnasen (200) dient.

28. Kunststoffbeutel (10) nach einem der Ansprüche 22 bis 27, wobei eine Dichtung aus einem flexiblen Material zur Abdichtung verwendet wird.

29. Kunststoffbeutel (10) nach Anspruch 28, wobei das flexible Material aus der Gruppe von Materialien stammt, die Isopren-Kautschuk, Halogenbutylkautschuk oder Thermoplastische Elastomere umfasst.

30. Kunststoffbeutel (10) nach einem der Ansprüche 28 und 29, wobei die Dichtung als Ring ausgebildet ist.

31. Kunststoffbeutel (10) nach einem der Ansprüche 28 bis 30, wobei die Dichtung als die Öffnung überspannende Lage ausgebildet ist.

32. Kunststoftbeutel (10) nach einem der Ansprüche 28 bis 31, wobei die Dichtung in einer Kappe (180) angebracht ist.

33. Kunststoffbeutel (10) nach Anspruch 32, wobei die Dichtung mit einer Kanüle durchstoßen werden kann.

34. Kunststoffbeutel (10) nach einem der Ansprüche 32 und 33, wobei die Kappe (180) die Dichtung umschließt.

35. Kunststoffbeutel (10) nach einem der Ansprüche 32 bis 34, wobei die Kappe (180) eine Sollbruchstelle (240) umfasst, wobei die Sollbruchstelle (240) so angebracht ist, dass ein Teil der Kappe (180) so weggebrochen werden kann, dass die Dichtung frei liegt und der Kunststoffbeutel (10) weiterhin abgedichtet ist.

36. Kunststoffbeutel (10) nach einem der Ansprüche 27 bis 34, wobei eine oder mehrere Lippen (210) bei aufgesetzter Kappe (180) in die Dichtung eindrücken.

37. Kunststoffelement (40) für einen Port (30), wobei das Kunststoffelement (40)
i) in einem Portschweißbereich (50), in dem es mit einen Kunststoffbeutel (10) verbunden werden kann, im Wesentlichen flach zusammendrückbar ist; und
ii) der Querschnitt (60) des unbelasteten Kunststoffelements (40) in Richtung hin zu seitlichen Rändern (70) des Portschweißbereichs (50) keilförmig zuläuft;
iii) der Portschweißbereich (50) eine oder mehrere erste Kanten ' (80) des Kunststoffelements (40) aufweist; und
wobei der Querschnitt (60) an den seitlichen Rändern (70) des Portschweißbereichs (50) zweite Kanten (90) bildet.

38. Kunststoffelement (40) nach Anspruch 37, wobei die eine oder mehrere ersten Kanten (80) im Portschweißbereich (50) im Wesentlichen parallel zu den seitlichen Rändern (70) des Portschweißbereichs (50) verlaufen.

39. Kunststoffelement (40) nach einem der Ansprüche 37 und 38, wobei die ersten Kanten (80) abgerundet sind.

40. Kunststoffelement (40) nach einem der Ansprüche 37 bis 39, wobei die zweiten Kanten (90) des Querschnitts (60) an den seitlichen Rändern (70) des Portschweißbereichs (50) spitz zulaufen.

41. Kunststoffelement (40) nach einem der Ansprüche 37 bis 40, wobei die zweiten Kanten (90) des Querschnitts (60) an den seitlichen Rändern (60) der Portschweißbereiche (50) abgerundet sind.

42. Kunststoffelement (40) nach einem der Ansprüche 37 bis 41, wobei die Form der zweiten Kanten (90) des Querschnitts (60) im Bereich der seitlichen Rändern (70) des Portschweißbereichs (50) beim Zusammendrücken des Kunststoffelements (40) im Portschweißbereich (50) im Wesentlichen unverändert bleibt.

43. Kunststoffelement (40) nach einem der Ansprüche 37: bis 42, wobei der Querschnitt (60) des Kunststoffelements (40) im Portschweißbereich (50) im Wesentlichen rhombusförmig ist.

44. Kunststoffelement (40) nach einem der Ansprüche 37 bis 42, wobei der Querschnitt (60) des Kunststoffelements (40) im Portschweißbereich (50) im Wesentlichen sechseckig ist.

45. Kunststoffelement (40) nach einem der Ansprüche 37 bis 44, wobei die Breite des Querschnitts (60) des Kunststoffelements (40) im Portschweißbereich (50) in der Kunststoffbeutelebene (100) größer ist als die Höhe senkrecht zur Kunststoffbeutelebene (100).

46. Kunststoffelement (40) nach einem der Ansprüche 37 bis 45, wobei das Kunststoffelement (40) aus spritzgegossenem Kunststoff gefertigt ist.

47. Kunststoffelement (40) nach einem der Ansprüche 37 bis 46, wobei das Kunststoffelement (40) im Wesentlichen Polyolefine als Material umfasst.

48. Kunststoffelement (40) nach einem der Ansprüche 37 bis 47, wobei das Kunststoffelement (40) aus Polypropylen ist.

49. Kunststoffelement (40) nach einem der Ansprüche 37 bis 48, wobei im Kunststoffelement (40) ein mit einer Kanüle durchstoßbares Dichtelement vorhanden ist.

50. Verfahren zur Herstellung eines Kunststoffbeutels (10) aus Kunststofffolie (20) mit einem oder mehreren Ports (30), die ein Kunststoffelement (40) umfassen, wobei die Kunststoffelemente (40)
i) in einem Portschweißbereich (50) im Wesentlichen flach zusammendrückbar sind und
ii) unbelastet einen Querschnitt (60) besitzen,
a) der in Richtung hin zu seitlichen Rändern (70) des Portschweißbereichs (50) keilförmig zuläuft; und
b) im Portschweißbereich (50) eine oder mehrere erste Kanten (80) bildet,
wobei der Querschnitt (60) an den seitlichen Rändern (70) des Portschweißbereichs (50) zweite Kanten (90) bildet,
wobei das Verfahren die folgenden Schritte umfasst:
i) Einlegen eines Kunststoffelements (40) zwischen zwei Lagen (22, 24) der Kunststofffolie (20);
ii) Zusammenpressen der zwei Lagen (22, 24) der Kunststofffolie (20) mit Zusammendrücken des Kunststoffelements (40) im Portschweißbereich (50);
iii) Erhitzen der Kunststofffolie (20) und des Kunststoffelements (40); und
iv) Verschweißen der zwei Lagen (22, 24) der Kunststofffolie (20) mit dem Kunststoffelement (40).

51. Verfahren zur Herstellung eines Kunststoffbeutels (10) nach Anspruch 50, wobei und der Schritt des Zusammenpressens und Verschweißens
i) auf einer im Wesentlichen ebenen Unterlage (270) und
ii) mit einem geformten Presswerkzeug (280), das von oben auf die Unterlage (270) drückt,
durchgeführt wird.

52. Verfahren nach Anspruch 51, wobei die Unterlage (270) auf einer im Wesentlichen konstanten ersten Temperatur gehalten wird.

53. Verfahren nach Anspruch 52, wobei die erste Temperatur unterhalb der Erweichungstemperatur des Materials der Kunststofffolie liegt.

54. Verfahren nach einem der Ansprüche 52 und 53, wobei die erste Temperatur zwischen 90°C und 120°C liegt.

55. Verfahren nach Anspruch 54, wobei die erste Temperatur ungefähr bei 100°C liegt.

56. Verfahren nach einem der Ansprüche 51 bis 55, wobei die Unterlage (270) in einem Bereich in dem Kunststoffelemente (40) an den Kunststoffbeutel (10) angeschweißt werden einen oder mehrere Einsätze umfasst, wobei die Einsätze
i) getrennt von der Unterlage (270) beheizt und auf eine dritte Temperatur gebracht und/oder gehalten werden können; und
ii) eine Vertiefung für einen Höhenausgleich des Kunststoffelements (40) beim Zusammendrücken des Werkzeugs (260) umfassen.

57. Verfahren nach Anspruch 56, wobei die dritte Temperatur oberhalb der Schmelztemperatur des Materials der Kunststofffolien (20) liegt.

58. Verfahren nach einem der Ansprüche 51 bis 57, wobei das geformte Presswerkzeug (280) auf einer im Wesentlichen konstanten zweiten Temperatur gehalten wird.

59. Verfahren nach Anspruch 58, wobei die zweite Temperatur oberhalb der Schmelztemperatur des Materials der Kunststofffolie liegt.

60. Verfahren nach einem der Ansprüche 58 und 59, wobei die zweite Temperatur zwischen 120°C und 170°C liegt.

61. Verfahren nach Anspruch 60, wobei die zweite Temperatur ungefähr bei 140°C liegt.

62. Verfahren nach einem der Ansprüche 50 bis 61, wobei das Presswerkzeug (280) einem Temperaturverlauf unterliegt.

63. Verfahren nach Anspruch 62, wobei die Temperatur beim Pressvorgang von einer zweiten Temperatur unterhalb der Erweichtemperatur des Materials der Kunststofffolie (20) auf eine zweite Temperatur oberhalb der Schmelztemperatur des Materials der Kunststofffolie (20) erhöht wird.

64. Verfahren nach einem der Ansprüche 50 bis 63, wobei die Kunststoffbeutel (10) nach dem Verschweißen der Kunststoffolie (20) mit dem Kunststoffelement (40) am Kunststoffelement (40) durch mindestens einen Greifer gefasst werden.

65. Verfahren nach Anspruch 64, wobei die Kunststoffbeutel (40) nach dem Schweiß/Schneidvorgang an den Außenbereichen der Kunststoffelemente (40) gefasst werden und keine Berührung des Innenbereichs der Kunststoffelemente (40) vorgenommen wird.

## Claims

1. A plastic bag (10) made of a plastic film (20) with one or more ports (30), wherein at least one port (30) comprises a plastic element (40), which:
i) is welded between two layers (22, 24) of the plastic film (20) and thereby forms a port-welding region (50), wherein
ii) the plastic element (40) in the port-welding region (50) is substantially flatly compressible;
iii) a cross-section (60) of the unstressed plastic element (40) is wedge-shaped towards side edges (70) of the port-welding region (50);
iv) the port-welding region (50) comprises one or more first edges (80) of the plastic element (40); and
wherein the cross-section (60) at the side edges (70) of the port-welding region (50) forms second edges (90).

2. The plastic bag (10) according to claim 1, wherein the one or more first edges (80) in the port-welding region (50) are substantially parallel to the side edges (70) of the port-welding region (50).

3. The plastic bag (10) according to any one of claims 1 and 2, wherein the first edges (80) are rounded.

4. The plastic bag (10) according to any one of claims 1 to 3, wherein the second edges (90) of the cross-section (60) are tapered at the side edges (70) of the port-welding region (50).

5. The plastic bag (10) according to claim 4, wherein the second edges (90) of the cross-section (60) are rounded at the side edges (70) of the port-welding region (50).

6. The plastic bag (10) according to any one of claims 1 to 5, wherein a shape of the second edges (90) of the cross-section (60) remains substantially unchanged in the area of the side edges (70) of the port-welding region (50) when compressing the plastic element (40) in the port-welding region (50).

7. The plastic bag (10) according to any one of the claims 1 to 6, wherein the cross-section (60) of the plastic element (40) is substantially of rhomboid shape in the port-welding region (50).

8. The plastic bag (10) according to any one of the claims 1 to 6, wherein the cross-section (60) of the plastic element (40) is substantially of hexagonal shape in the port-welding region (50).

9. The plastic bag (10) according to any one of claims 1 to 8, wherein the width of the cross-section (60) of the plastic element (40) in the port-welding region (50) in the plastic bag plane (100) is larger than the height perpendicular to the plastic bag plane (100).

10. The plastic bag (10) according to any one of claims 1 to 9, wherein the plastic element (40) is made of injection moulded plastic.

11. The plastic bag (10) according to any one of claims 1 to 10, wherein the plastic element (40) is made of polypropylene.

12. The plastic bag (10) according to any one of claims 1 to 11, wherein the plastic film (20) comprises of three layers of polypropylene and/or polypropylene copolymers.

13. The plastic bag (10) according to any one of claims 1 to 12, wherein the port (30) is clamp-able.

14. The plastic bag (10) according to claim 13, wherein the clamping of the port (30) can take place in a port region, the port region being formed by the plastic bag (10) by a protrusion of the compressible area of the plastic element (40) in the port-welding region (50).

15. The plastic bag (10) according to any one of claims 1 to 14, wherein the port (30) has an inner port cross-section (110), changing in a first transition region (130) from a form within the port-welding region (50) into a circular shape.

16. The plastic bag (10) according to any one of claims 1 to 15, wherein the port (30) has an outer port cross-section (120), changing in a second transition region (140) from a form within the port-welding region (50) into a circular shape.

17. The plastic bag (10) according to any one of claims 1 to 16, wherein the port (30) has an outer port cross-section (120) wherein the surface of the cross-section (60) increases from the port-welding region (50) to a second port end (170).

18. The plastic bag (10) according to any one of claims 1 to 17, wherein a wall thickness (150) of the plastic element (40) increases from the first port end (160) at the port-welding region (50) to the second port end (170).

19. The plastic bag (10) according to any one of claims 1 to 18, wherein a stability of shape increases from the compressible first port end (160) in the port-welding region (50) to the second port end (170).

20. The plastic bag (10) according to according to any one of claims 1 to 19, wherein one or more ports are sealed with a membrane.

21. The plastic bag (10) according to any one of claims 1 to 20, wherein the plastic element (40) in the area of the second port end (170) has a substantially stable shape.

22. The plastic bag (10) according to any one of claims 1 to 21, wherein the port (30) is close able.

23. The plastic bag (10) according to claim 22, wherein the port (30) is closable by a cap (180) on the plastic element (40).

24. The plastic bag (10) according to claim 23, wherein the cap (180) is lockable when pressed onto the plastic element (40).

25. The plastic bag (10) according to any one of the claims 23 and 24, wherein the cap (180) is provided with an anti-twist protection on the plastic element (40).

26. The plastic bag (10) according to claim 25, wherein a geometric shape of the cap (180) and the plastic element (40) serve as the anti-twist protection.

27. The plastic bag (10) according to any one of claims 25 and 26, wherein the anti-twist protection is a combination of one or more locking pins (200) and notches (190) for the one or more locking pins (200).

28. The plastic bag (10) according to any one of claims 22 to 27, wherein a seal made of a flexible material used for sealing.

29. The plastic bag (10) according to claim 28, wherein the flexible material is selected from the group of materials comprising of isoprene rubber, halogen butyl rubber or thermoplastic elastomers.

30. The plastic bag (10) according to any one of claims 28 and 29, wherein the seal is ring-shaped.

31. The plastic bag (10) according to any one of claims 28 to 30, wherein the seal is formed as a layer spanning across the opening.

32. The plastic bag (10) according to any one of claims 28 to 31, wherein the seal is fitted in the cap (180).

33. The plastic bag (10) according to claim 32, wherein the seal can be punctured by a cannula.

34. The plastic bag (10) according to any one of claims 32 and 33, wherein the cap (180) encloses the seal.

35. The plastic bag (10) according to any one of claims 32 to 34, wherein the cap (180) comprises a line of breakage (240), wherein the line of breakage (240) is designed such that a part of the cap (180) can be broken off in such a way that the seal is visible and the plastic bag (10) is still sealed.

36. The plastic bag (10) according to any one of claims 27 to 34, wherein one or more lips (210) press into the seal when the cap (180) is in place.

37. A plastic element (40) for a port (30) wherein the plastic element (40):
i) in a port-welding region (50), the port-wedding region (50) being connectable to a plastic bag (10) being substantially flatly compressible; and
ii) the cross-section (60) of the unstressed plastic element (40) is wedge shaped towards the side edges (70) of the port-welding region (50); and
iii) the port-welding region (50) comprises one or more first edges (80) of the plastic element (40); and
wherein the cross-section (60) forms second edges (90) at the side edges (70) of the port-welding region (50).

38. The plastic element (40) according to claim 37, wherein one or more of the first edges (80) in the port-welding region (50) run substantially parallel to the side edges (70) of the port-welding region (50).

39. The plastic element (40) according to any one of claims 37 and 38, wherein the first edges (80) are rounded.

40. The plastic element (40) according to any one of claims 37 to 39, wherein the second edges (90) of the cross-section (60) are tapered at the side edges (70) of the port-welding region (50).

41. The plastic element (40) according to any one of claims 37 to 40, wherein the second edges (90) of the cross-section (60) are rounded towards the side edges (70) of the port-welding region (50).

42. The plastic element (40) according to any one of claims 37 to 41, wherein the shape of the second edges (90) of the cross-section (60) remains substantially unchanged in the area of the side edges (70) of the port-welding region (50) on compression of the plastic element (40) in the port-welding region (50).

43. The plastic element (40) according to any one of claims 37 to 42, wherein the cross-section (60) of the plastic element (40) is substantially of rhomboid shape in the port-welding region (50).

44. The plastic element (40) according to any one of claims 37 to 42, wherein the cross-section (60) of the plastic element (40) is substantially hexagonal shaped in the port-welding region (50).

45. The plastic element (40) according to any one of claims 37 to 44, wherein a width of the cross-section (60) of the plastic element (40) in the port-welding region (50) in the plastic bag plane (100) is larger than a height perpendicular to the plastic bag plane (100).

46. The plastic element (40) according to any one of claims 37 to 45, wherein the plastic element (40) is made of injection moulded plastic.

47. The plastic element (40) according to any one of claims 37 to 46, wherein the plastic element (40) substantially comprises a polyolefin material.

48. The plastic element (40) according to any one of claims 37 to 47, wherein the plastic element (40) is made of polypropylene.

49. The plastic element (40) according to any one of claims 37 to 48, wherein within the plastic element (40) a seal element is provided which puncture-able with a cannula.

50. A method for the manufacture of a plastic bag (10) from a plastic film (20) with one or more ports (30) including a plastic element (40) wherein the plastic elements (40):
i) are substantially flatly compressible in the port-welding region (50); and
ii) when unstressed has a cross-section (60),
a) which is wedge-shaped towards the side edges (70) of the port-welding region (50); and
b) forms one or more first edges (80) in the port-welding region (50), wherein the cross-section (60) at the side edges (70) of the port-welding region (50) forms second edges (90),
wherein the method comprises the following steps:
i) inserting a plastic element (40) between two layers (22, 24) of the plastic film (20);
ii) pressing the two layers (22, 24) of the plastic film (20) while compressing the plastic element (40) in the port-welding region (50);
iii) heating the plastic film (20) and the plastic element (40); and
iv) welding the two layers (22, 24) of the film (20) with the plastic element (40).

51. The method for the manufacture of the plastic bag (10) according to claim 50, wherein the step of pressing together and welding are carried out:
i) on an essentially even base (270), and
ii) with a formed pressing tool (280), which presses onto the base (270).

52. The method according to claim 51, wherein the base (270) is maintained at a substantially constant first temperature.

53. The method according to claim 52, wherein the first temperature lies below the softening temperature of the material of the plastic film (20).

54. The method according to any one of claims 52 and 53, wherein the first temperature lies between 90°C and 120°C.

55. The method according to claim 54, wherein the first temperature is approximately 100°C.

56. The method according to any one of the claims 51 to 55, wherein the base (270) comprises one or more inserts in a region, wherein the plastic elements (40) are welded to the plastic bag (10), wherein the inserts:
i) are heated and/or maintained at a third temperature independently from the base (270); and
ii) comprise a recess for compensating for a height difference in the plastic element (40) when it is pressed together by the tool (260).

57. The method according to claim 56, wherein the third temperature lies above the melting temperature of the material of the plastic film (20).

58. The method according to any one of claims 51 to 57, wherein the formed pressing tool (280) is maintained at a substantially constant second temperature.

59. The method according to claim 58, wherein the second temperature lies above the melting temperature of the material of the plastic film (20).

60. The method according to any one of claims 58 and 59, wherein the second temperature lies between 120°C and 170°C.

61. The method according to claim 60, wherein the second temperature is approximately 140°C.

62. The method according to any one of claims 50 to 61, wherein the formed pressing tool (280) has a temperature gradient.

63. The method according to claim 62, wherein the temperature during the pressing process goes from a second temperature which is below the softening temperature of the material of the plastic film (20) to a second temperature which is above the melting temperature of the material of the plastic film (20).

64. The method according to any one of claims 50 to 63, wherein the plastic bag (10) can be gripped at the plastic element (40) after welding the plastic film (20) with the plastic element (40) by at least one gripper.

65. The method according to claim 64, wherein the plastic bag (10) is gripped at an outer area of the plastic element (40) after a welding/cutting step and without contact with an inside area of the plastic element (40).

## Revendications

1. Poche en matière plastique (10) en feuille en matière plastique (20) avec un ou plusieurs embouts (30), un embout au moins comprenant un élément en matière plastique (40), qui
i) est soudé entre deux couches (22, 24) de feuille en matière plastique et y forme un secteur de soudage d'embout, dans lequel
ii) l'élément en matière plastique (40) est essentiellement plat compressible dans le secteur de soudage d'embout ; et
iii) la section (60) de l'élément en matière plastique (40) non-contraint afflue en direction des bords latéraux (70) du secteur de soudage d'embout (50) formant clavette;
iv) le secteur de soudage d'embout (50) comportant un ou plusieurs premiers rebords (80) de l'élément en matière plastique (40) ; et
la section (60) formant des deuxièmes rebords (90) sur les bords latéraux (70) du secteur de soudage d'embout (50).

2. Poche en matière plastique (10) selon la revendication 1, dans laquelle les un ou plusieurs premiers rebords (80) dans le secteur de soudage d'embout (50) sont essentiellement parallèles aux bords latéraux (70) du secteur de soudage d'embout (50).

3. Poche en matière plastique (10) selon l'une des revendications 1 ou 2, dans laquelle les premiers rebords (80) sont arrondis.

4. Poche en matière plastique (10) selon l'une quelconque des revendications 1 à 3, dans laquelle les deuxièmes rebords (90) de la section (60) se terminent en pointe au niveau des bords latéraux (70) du secteur de soudage d'embout (50).

5. Poche en matière plastique (10) selon la revendication 4, dans laquelle les deuxièmes rebords (90) de la section (60) sont arrondis sur les bords latéraux (60) du secteur de soudage d'embout (50).

6. Poche en matière plastique (10) selon l'une des revendications 1 à 5, dans laquelle la forme des deuxièmes rebords (90) de la section (60) dans le secteur des bords latéraux (70) du secteur de soudage d'embout (50) reste essentiellement inchangée lors de la compression de l'élément en matière plastique (40) dans le secteur de soudage d'embout (50).

7. Poche en matière plastique (10) selon l'une des revendications 1 à 6, dans laquelle la section (60) de l'élément en matière plastique (40) dans le secteur de soudage d'embout (50) est essentiellement en forme de losange.

8. Poche en matière plastique (10) selon l'une des revendications 1 à 6, dans laquelle la section (60) de l'élément en matière plastique (40) dans le secteur de soudage d'embout est essentiellement de forme hexagonale.

9. Poche en matière plastique (10) selon l'une des revendications 1 à 8, dans laquelle la largeur de la section (60) de l'élément en matière plastique (40) est supérieure, dans le secteur de soudage d'embout (50) dans le plan de poche en matière plastique (100), à la hauteur perpendiculaire au plan de poche en matière plastique (100).

10. Poche en matière plastique (10) selon l'une des revendications 1 à 9, dans lequel l'élément en matière plastique (40) est fabriqué à partir de matière plastique moulée par injection.

11. Poche en matière plastique (10) selon l'une des revendications 1 à 10, dans laquelle l'élément en matière plastique (40) est en polypropylène.

12. Poche en matière plastique (10) selon l'une des revendications 1 à 11, dans laquelle la feuille en matière plastique (20) comprend trois couches de polypropylène et/ou copolymère de polypropylène.

13. Poche en matière plastique (10) selon l'une quelconque des revendications 1 à 12, dans laquelle l'embout (30) est apte à être pressé.

14. Poche en matière plastique (10) selon la revendication 13, dans laquelle la pression de l'embout (30) peut s'effectuer dans un secteur d'embout, qui est formé par une saillie du secteur comprimable de l'élément en matière plastique (40) dans le secteur de soudage d'embout (50) de la poche en matière plastique.

15. Poche en matière plastique (10) selon l'une des revendications 1 à 14, dans laquelle l'embout (30) comprend une section d'embout interne (110), qui passe, dans un premier secteur de transition (130), de la forme dans le secteur de soudage d'embout (50), à une forme circulaire.

16. Poche en matière plastique (10) selon l'une des revendications 1 à 15, dans laquelle l'embout (30) comprend une section d'embout externe (120), qui passe, dans un deuxième secteur de transition (140), de la forme dans le secteur de soudage d'embout (50), à une forme circulaire.

17. Poche en matière plastique (10) selon l'une des revendications 1 à 16, dans laquelle l'embout (30) comprend une section d'embout externe (120), la surface de la section (60) du secteur de soudage d'embout augmentant du secteur de soudage d'embout (50) à une deuxième extrémité d'embout (170).

18. Poche en matière plastique (10) selon l'une des revendications 1 à 17, dans laquelle l'épaisseur des parois (150) de l'élément en matière plastique augmente d'une première extrémité d'embout (160) dans le secteur de soudage d'embout (50) à la deuxième extrémité d'embout (170).

19. Poche en matière plastique (10) selon l'une des revendications 1 à 18, dans laquelle l'indéformabilité de la première extrémité d'embout (160) comprimable augmente dans le secteur de soudage d'embout (50) jusqu'à la deuxième extrémité d'embout (170).

20. Poche en matière plastique (10) selon l'une des revendications 1 à 19, dans laquelle un ou plusieurs embouts sont fermés par une membrane.

21. Poche en matière plastique (10) selon l'une des revendications 1 à 20, dans laquelle l'élément en matière plastique (40) est essentiellement indéformable dans le secteur de la deuxième extrémité d'embout (170).

22. Poche en matière plastique (10) selon l'une des revendications 1 à 21, dans laquelle l'embout (30) peut être fermé.

23. Poche en matière plastique (10) selon la revendication 22, dans laquelle l'embout (30) peut être fermé sur l'élément en matière plastique (40) par un capuchon (180).

24. Poche en matière plastique (10) selon la revendication 23, dans laquelle le capuchon (180) s'enclenche lors d'une pression sur l'élément en matière plastique (40).

25. Poche en matière plastique (10) selon l'une des revendications 23 et 24, dans laquelle le capuchon (180) est équipé, sur l'élément en matière plastique, d'une protection contre la torsion.

26. Poche en matière plastique (10) selon la revendication 25, dans laquelle la forme géométrique du capuchon (180) et de l'élément en matière plastique (40) tient lieu de protection contre la torsion.

27. Poche en matière plastique (10) selon l'une des revendications 25 et 26, dans laquelle une combinaison d'un ou plusieurs nez d'accrochage (200) et d'évidements (190) pour le un ou plusieurs nez d'accrochage (200) tient lieu de protection contre la torsion.

28. Poche en matière plastique (10) selon l'une des revendications 22 à 27, dans laquelle un joint d'une matière flexible est utilisé pour l'étanchéité.

29. Poche en matière plastique (10) selon la revendication 28, dans laquelle la matière flexible provient du groupe constitué par les caoutchoucs isoprène, les caoutchoucs butyl halogéné ou élastomères thermoplastique.

30. Poche en matière plastique (10) selon une des revendications 28 et 29, dans lequel le joint est formé en un cercle.

31. Poche en matière plastique (10) selon une des revendications 28 à 30, dans laquelle le joint est formé comme une couche recouvrant l'ouverture.

32. Poche en matière plastique (10) selon l'une des revendications 28 à 31, dans laquelle le joint est placé dans un capuchon (180).

33. Poche en matière plastique (10) selon la revendication 32, dans laquelle une canule peut passer à travers le joint.

34. Poche en matière plastique (10) selon l'une des revendications 32 et 33, dans laquelle le capuchon (180) entoure le joint.

35. Poche en matière plastique (10) selon l'une des revendications 32 à 34, dans laquelle le capuchon (180) comprend un point de rupture (240), le point de rupture (240) étant fixé de sorte qu'une partie du capuchon (180) peut être cassée de telle sorte que le joint tient librement et que la poche en matière plastique (10) est toujours étanchéifiée.

36. Poche en matière plastique (10) selon l'une des revendications 27 à 34, dans laquelle une ou plusieurs lèvres (210) pressent sur le joint lorsque le capuchon (180) est en place.

37. Elément en matière plastique (40) pour un embout (30), l'élément en matière plastique (40)
i) étant essentiellement plat comprimable dans un secteur de soudage d'embout (50), dans lequel il peut être relié à une poche en matière plastique ; et
ii) la section (60) de l'élément en matière plastique (40) non contraint affluant en direction des bords latéraux (70) du secteur de soudage d'embout (50) formant clavette ;
iii) le secteur de soudage d'embout (50) comprenant un ou plusieurs premiers rebords (80) de l'élément en matière plastique (40), et
la section (60) formant des deuxièmes rebords (90) sur les bords latéraux (70) du secteur de soudage d'embout (50).

38. Elément en matière plastique (40) selon la revendication 37, dans lequel les un ou plusieurs premiers rebords (80) dans le secteur de soudage d'embout (50) sont essentiellement parallèles aux bords latéraux (70) du secteur de soudage d'embout (50).

39. Elément en matière plastique (40) selon l'une des revendications 37 et 38, dans lequel les premiers rebords (80) sont arrondis.

40. Elément en matière plastique (40) selon l'une des revendications 37 à 39, dans lequel les deuxièmes rebords (90) de la section (60) se terminent en pointe au niveau des côtés latéraux (70) du secteur de soudage d'embout (50).

41. Elément en matière plastique (40) selon l'une des revendications 37 à 40, dans lequel les deuxièmes rebords (90) de la section (60) sont arrondis sur les bords latéraux (60) du secteur de soudage d'embout (50).

42. Elément en matière plastique (40) selon l'une des revendications 37 à 41, dans lequel la forme des deuxièmes rebords (90) de la section (60) dans le secteur des bords latéraux (70) du secteur de soudage d'embout (50) reste inchangée lors de la compression de l'élément en matière plastique (40) dans le secteur de soudage d'embout (50).

43. Elément en matière plastique (40) selon l'une des revendications 37 à 42, dans lequel la section (60) de l'élément en matière plastique (40) dans le secteur de soudage d'embout (50) est essentiellement en forme de losange.

44. Elément en matière plastique (40) selon l'une des revendications 37 à 42, dans lequel la section (60) de l'élément en matière plastique (40) dans le secteur de soudage d'embout est essentiellement de forme hexagonale.

45. Elément en matière plastique (40) selon l'une des revendications 37 à 44, dans lequel la largeur de la section (60) de l'élément en matière plastique (40) dans le secteur de soudage d'embout (50) dans le plan de poche en matière plastique (100) est supérieure à la hauteur perpendiculaire au plan de poche en matière plastique (100).

46. Elément en matière plastique (40) selon l'une des revendications 37 à 45, dans lequel l'élément en matière plastique (40) est fabriqué à partir de matière plastique moulée par injection.

47. Elément en matière plastique (40) selon l'une des revendications 37 à 46, dans lequel l'élément en matière plastique (40) comprend essentiellement comme matière de la polyoléfine.

48. Elément en matière plastique (40) selon l'une des revendications 37 à 47, dans lequel l'élément en matière plastique est en polypropylène.

49. Elément en matière plastique (40) selon l'une des revendications 37 à 48, dans lequel un joint transpercable avec une canule existe dans l'élément en matière plastique.

50. Procédé de production d'une poche en matière plastique (10) à partir de feuille en matière plastique (20) avec un ou plusieurs embouts (30), qui comprennent un élément en matière plastique (40), dans lequel les éléments en matière plastique (40)
i) sont essentiellement plats comprimables dans un secteur de soudage d'embout (50)
et
ii) lorsque non contraints, comprennent une section (60),
a) qui afflue en direction des bords latéraux (70) du secteur de soudage d'embout formant clavette ; et
b) forme dans le secteur de soudage d'embout (50) un ou plusieurs premiers rebords,
la section (60) formant des deuxièmes rebords (90) sur les bords latéraux (70) du secteur de soudage d'embout (50),
le procédé comprenant les étapes de :
i) mise en place d'un élément en matière plastique (40) entre deux couches (22, 24) de feuille en matière plastique ;
ii) compression des deux couches (22, 24) de feuille en matière plastique (20) avec compression de l'élément en matière plastique (40) dans le secteur de soudage d'embout (50) ;
iii) chauffage de la feuille en matière plastique (20) et de l'élément en matière plastique (40) ; et
iv) soudage des deux couches (22, 24) de feuille en matière plastique (20) et de l'élément en matière plastique (40).

51. Procédé de production d'une poche en matière plastique (10) selon la revendication 50, dans lequel l'étape de compression et de soudage est réalisée
i) sur un support essentiellement plat (270) et
ii) avec un outil à moulage par compression (280) formé, qui exerce une pression du haut sur le support (270)

52. Procédé selon la revendication 51, dans lequel le support (270) est maintenu essentiellement à une première température constante.

53. Procédé selon la revendication 52, dans lequel la première température est en dessous de la température d'amollissement de la matière de la feuille en matière plastique.

54. Procédé selon l'une des revendications 52 et 53, dans lequel la première température est comprise entre 90°C et 120°C.

55. Procédé selon la revendication 54, dans lequel la première température est d'environ 100°C.

56. Procédé selon l'une des revendications 51 à 55, dans lequel le support (270) comprend un ou plusieurs inserts, dans un secteur dans lequel les éléments en matière plastique sont soudées sur la poche en matière plastique (10), les inserts
i) pouvant être chauffés séparément du support (270) et apportés et/ou maintenus à une troisième température ; et
ii) comprenant une empreinte pour un rééquilibrage de hauteur de l'élément en matière plastique (40) lors de la compression par l'outil (260).

57. Procédé selon la revendication 56, dans lequel la troisième température est au-dessus de la température de fusion de la matière de la feuille en matière plastique (20).

58. Procédé selon l'une des revendications 51 à 57, l'outil à moulage par compression formé (280) est essentiellement maintenu à une deuxième température constante.

59. Procédé selon la revendication 58, dans lequel la deuxième température est au dessus de la température de fusion de la matière de la feuille en matière plastique.

60. Procédé selon l'une des revendications 58 et 59, dans lequel la deuxième température est comprise entre 120°C et 170°C.

61. Procédé selon la revendication 60, dans lequel la deuxième température est d'environ 140°C.

62. Procédé selon l'une des revendications 50 à 61, dans lequel l'outil à moulage par compression (280) est soumis à un gradient de température.

63. Procédé selon la revendication 62, dans lequel la température, lors du processus de moulage, est augmentée, d'une deuxième température en-dessous de la température d'amollissement de la matière de la feuille en matière plastique (20) à une deuxième température au-dessus de la température de fusion de la matière de la feuille en matière plastique (20).

64. Procédé selon l'une quelconque des revendications 50 à 63, dans lequel les poches en matière plastique (10) sont saisies par au moins un crochet après le soudage de la feuille en matière plastique (20) avec l'élément en matière plastique (40).

65. Procédé selon la revendication 64, dans lequel les poches en matière plastiques (40) sont saisies sur les zones extérieures des éléments en matière plastique (40) après le processus de soudage/découpage et dans lequel aucun contact de la zone intérieure des éléments en matière plastique (40) n'est prévu.
